# EUROPEAN PATENT SPECIFICATION

(11) **EP 3 510 063 B1**
(45) Date of publication and mention of the grant of the patent: **09.10.2019**
(21) Application number: 17793978.2
(22) Date of filing: 09.11.2017
(51) Int. Cl.: C08F 110/02

(54) **OLEFIN POLYMERIZATION PROCESS IN A GAS-PHASE REACTOR HAVING THREE OR MORE POLYMERIZATION ZONES**
OLEFINPOLYMERISIERUNGSVERFAHREN IN GASPHASENREAKTOR MIT DREI ODER MEHR POLYMERISIERUNGSBEREICHEN
PROCÉDÉ DE POLYMÉRISATION D'OLÉFINES DANS UN RÉACTEUR EN PHASE GAZEUSE AYANT TROIS OU PLUSIEURS ZONES DE POLYMÉRISATION

(30) Priority: 10.11.2016 EP 16198260
(43) Date of publication of application: 17.07.2019
(73) Proprietor: Basell Polyolefine GmbH, 50389 Wesseling (DE)
(72) Inventor: MEIER, Gerhardus, Houston, TX 77077-1928 (US); SCHUELLER, Ulf, 64331 Weiterstadt (DE)
(74) Representative: Seelert, Stefan
(86) International application number: PCT/EP2017/078719
(87) International publication number: WO 2018/087209

(56) References cited:
- EP-A1- 2 722 347
- WO-A1-2006/120187
- WO-A1-2014/064060
- WO-A1-2014/064062

## Description

### FIELD OF THE INVENTION

The present disclosure provides processes for preparing an olefin polymer comprising polymerizing one or more olefins in the presence of a polymerization catalyst and hydrogen as molecular weight regulator in a gas-phase polymerization reactor comprising a polymerization zone in which the growing polymer particles flow downward in a densified form.

### BACKGROUND OF THE INVENTION

Hydrogen is a common molecular weight regulator in olefins polymerization processes. When polymerizing the olefins in a combination of polymerization zones which have different concentrations of hydrogen, it is possible to broaden the molecular weight distribution of the obtained polyolefin or to obtain polyolefins having a bi- or multimodal molecular weight distribution.

An example of polymerizations reactors which allow to produce broadened or bimodal polyolefins are multizone circulating gas-phase polymerization reactors, in which the growing polymer particles flow upward through a first polymerization zone (riser) under fast fluidization or transport conditions, leave said riser and enter a second polymerization zone (downcomer) through which the growing polymer particles flow downward in a densified form, leave said downcomer and are reintroduced into the riser, thus establishing a circulation of polymer between the riser and the downcomer. WO 00/02929 A1 describes that different hydrogen concentrations can be created in the riser and the downcomer of a multizone circulating reactor when the reaction gas mixture present in the riser is prevented from entering the downcomer by introducing into the downcomer a gas and/or liquid mixture having a composition different from the reaction gas mixture present in the riser. WO 2006/120187 A1 discloses a process for polymerizing olefins in a multizone circulating reactor in which the gaseous composition in a portion of the downcomer is maintained substantially similar to the gaseous composition reacting in the riser.

Another configuration for preparing polyolefins, in which one polymerization reactor has two polymerization zones of a different hydrogen concentration, is implemented in reactor systems comprising a fluidized bed of growing polymer particles and a connected zone, in which growing polymer particles flow downward in a densified form. The polymerization zone, in which the growing polymer particles flow downward, can be integrated within the fluidized bed reactor as disclosed in WO 2009/080360 A1 or can be externally arranged such as described in EP 2 745 926 A1. Polymerization zones, in which the growing polymer particles flow downward in a densified form, are sometime also designated as "moving bed" or "settled bed" unit or reactor.

These polymerization processes have in common that they are operated in one polymerization reactor having two zones of a different composition of the reaction gas mixture. However, for improving the polymer property balance, it may be desirable to increase the flexibility in tailoring the composition of the olefin polymers and provide a possibility to carry out the polymerization within one polymerization reactor under further differentiated conditions; that means to operate with three or more different compositions of the reaction gas mixtures within one polymerization reactor.

WO 2004/033505 A1 describes gas-phase polymerization processes in polymerization reactors having three different polymerization zones, wherein one polymerization zone contains a fluidized bed, one polymerization zone is a downcomer and one polymerization zone is a riser. However, these processes have the disadvantage that they cannot be carried out in existing polymerization reactors and that they have a restriction in the number of sub-zones.

There is accordingly a need to provide an olefin polymerization process which easily allows polymerizing in three or more polymerization zones within one polymerization reactor, and so producing homogeneous multi-modal olefin polymers with improved polymer property combinations.

### SUMMARY OF THE INVENTION

The present disclosure provides a process for preparing an olefin polymer comprising polymerizing one or more olefins in the presence of a polymerization catalyst and hydrogen as molecular weight regulator in a gas-phase polymerization reactor comprising three or more polymerization zones which differ in the ratio of hydrogen to the sum of olefins in the reaction gas mixture within the polymerization zones, expressed as ratios of the volume fractions, and at least two of the polymerization zones are sub-zones of a polymerization unit, in which the growing polymer particles flow downward in a densified form and least one of the polymerization zones is a riser, in which growing polymer particles flow upwards under fast fluidization or transport conditions, or is a polymerization zone, in which the polymerization occurs in a fluidized bed of growing polymer particles, wherein the gas-phase polymerization reactor comprises at least one polymerization zone, which has a ratio of hydrogen to the sum of olefins which is by a factor of at least 1.5 lower than the ratio of hydrogen to the sum of olefins in the polymerization zone having the highest ratio of hydrogen to the sum of olefins and which is by a factor of at least 1.5 higher than the ratio of hydrogen to the sum of olefins in the polymerization zone having the lowest ratio of hydrogen to the sum of olefins..

In some embodiments, the gas-phase polymerization reactor is a multizone circulating reactor in which one polymerization zone is a riser, in which growing polymer particles flow upwards under fast fluidization or transport conditions, and the other polymerization zones are sub-zones of a downcomer, in which the growing polymer particles flow downward in a densified form, wherein the riser and the downcomer are interconnected and polymer particles leaving the riser enter the downcomer and polymer particles leaving the downcomer enter the riser, thus establishing a circulation of polymer particles through the riser and the downcomer.

In some embodiments, one polymerization zone is a polymerization zone, in which the polymerization occurs in a fluidized bed of growing polymer particles.

In some embodiments, a barrier fluid in liquid form is fed into the upper part of the polymerization unit, in which the growing polymer particles flow downward in a densified form.

In some embodiments, the barrier fluid has a composition that the gas produced by vaporizing the barrier fluid has less than 0.5 vol.% hydrogen.

In some embodiments, the barrier fluid is obtained by feeding a part of a recycle gas stream into a distillation column and withdrawing the barrier fluid from the bottom of the distillation column.

In some embodiments, the difference in the ratios of hydrogen to the sum of olefins in the sub-zones of the polymerization unit, in which the growing polymer particles flow downward in a densified form, is obtained by feeding a part of a recycle gas stream to at least one of the sub-zones of the polymerization unit, in which the growing polymer particles flow downward in a densified form.

In some embodiments, the difference in the ratios of hydrogen to the sum of olefins in the sub-zones of the polymerization unit, in which the growing polymer particles flow downward in a densified form, is obtained by feeding a part of a recycle gas stream into a distillation column and withdrawing a hydrogen-rich gas from the top of the distillation column and feeding the gas withdrawn from the top of the distillation column to at least one of the sub-zones of the polymerization unit, in which the growing polymer particles flow downward in a densified form.

In some embodiments, the hold-up of polymer particles in the polymerization unit, in which the growing polymer particles flow downward in a densified form, is from 55 wt.% to 80 wt.% of the total hold-up of polymer particles in the gas-phase polymerization reactor.

In some embodiments, the gas-phase polymerization reactor comprising three or more polymerization zones which differ in the ratio of hydrogen to the sum of olefins in the reaction gas mixture is part of a reactor cascade.

In some embodiments, the reactor cascade comprises a fluidized bed reactor upstream of the gas-phase polymerization reactor comprising three or more polymerization zones which differ in the ratio of hydrogen to the sum of olefins in the reaction gas mixture.

In some embodiments, the polymerization catalyst is a Ziegler- or Ziegler-Natta-catalyst.

In some embodiments, the olefin polymer is an ethylene polymer prepared by homopolymerizing ethylene or copolymerizing ethylene with one or more comonomers.

In some embodiments, the ethylene polymer has a density of from 0.916 to 0.964 g/cm³, more preferably from 0.935 to 0.960 g/cm³, determined according to DIN EN ISO 1183-1:2004, Method A (Immersion) and a MFR216 at a temperature of 190 °C under a load of 21.6 kg, determined according to DIN EN ISO 1133-1:2012-03, of from 0.5 to 300 g/10 min.

### BRIEF DESCRIPTION OF THE DRAWINGS

Figure 1 shows schematically a set-up for carrying out the process of the present disclosure.
Figure 2 shows schematically another set-up for carrying out the process of the present disclosure.

### DETAILED DESCRIPTION OF THE INVENTION

The present disclosure provides a process for preparing an olefin polymer comprising polymerizing one or more olefins in the presence of a polymerization catalyst. Olefins which may be employed in the process of the present disclosure are especially 1-olefins, i.e. hydrocarbons having terminal double bonds, without being restricted thereto. Suitable olefins can be functionalized olefinically unsaturated compounds such as ester or amide derivatives of acrylic or methacrylic acid, for example acrylates, methacrylates, or acrylonitrile. Preference is given to nonpolar olefinic compounds, including aryl-substituted 1-olefins. Particularly preferred 1-olefins are linear or branched C₂-C₁₂-1-alkenes, in particular linear C₂-C₁₀-1-alkenes such as ethylene, propylene, 1-butene, 1-pentene, 1-hexene, 1-heptene, 1-octene, 1-decene or branched C₂-C₁₀-1-alkenes such as 4-methyl-1-pentene, conjugated and nonconjugated dienes such as 1,3-butadiene, 1,4-hexadiene or 1,7-octadiene or vinylaromatic compounds such as styrene or substituted styrene. It is also possible to polymerize mixtures of various 1-olefins. Suitable olefins also include ones in which the double bond is part of a cyclic structure which can have one or more ring systems. Examples are cyclopentene, norbornene, tetracyclododecene or methylnorbornene or dienes such as 5-ethylidene-2-norbornene, norbornadiene or ethylnorbornadiene. It is also possible to polymerize mixtures of two or more olefins.

The process is in particular suitable in the homopolymerization or copolymerization of ethylene or propylene and is especially preferred for the homopolymerization or copolymerization of ethylene. Preferred comonomers in propylene polymerization are up to 40 wt.% of ethylene and/or 1-butene, preferably from 0.5 wt.% to 35 wt.% of ethylene and/or 1-butene. As comonomers in ethylene polymerization, preference is given to using up to 20 wt.%, more preferably from 0.01 wt.% to 15 wt.% and especially from 0.05 wt.% to 12 wt.% of C₃-C₈-1-alkenes, in particular 1-butene, 1-pentene, 1-hexene and/or 1-octene. Particular preference is given to a process in which ethylene is copolymerized with from 0.1 wt.% to 12 wt.% of 1-hexene and/or 1-butene.

The polymerization of the present disclosure is carried out in a gas-phase polymerization reactor in the presence of hydrogen as molecular weight regulator. The reaction gas mixtures within the reactor accordingly comprise the olefins to be polymerized, i.e. a main monomer and one or more optional comonomers, and hydrogen as molecular weight regulator. The reaction gas mixtures may further comprise inert gases such as nitrogen or an alkane having from 1 to 10 carbon atoms such as methane, ethane, propane, n-butane, isobutane, n-pentane, isopentane or n-hexane or mixtures thereof. The use of nitrogen or propane as inert gas, if appropriate in combination with further alkanes, is preferred. In especially preferred embodiments of the present disclosure, the polymerization is carried out in the presence of a C₃-C₅ alkane as polymerization diluent and most preferably in the presence of propane, especially in the case of homopolymerization or copolymerization of ethylene. The reaction gas mixture may further comprise additional components such as polymerization inhibitors like carbon monoxide or water or additional molecular weight regulators besides hydrogen. The components of the reaction gas mixture may be fed into the gas-phase polymerization reactor in gaseous form or as liquid which vaporizes within the reactor.

The polymerization of olefins can be carried out using all customary olefin polymerization catalysts. That means the polymerization can be carried out using Phillips catalysts based on chromium oxide, using Ziegler- or Ziegler-Natta-catalysts, or using single-site catalysts. For the purposes of the present disclosure, single-site catalysts are catalysts based on chemically uniform transition metal coordination compounds. Furthermore, it is also possible to use mixtures of two or more of these catalysts for the polymerization of olefins. Such mixed catalysts are often designated as hybrid catalysts. The preparation and use of these catalysts for olefin polymerization are generally known.

Preferred catalysts are of the Ziegler type preferably comprising a compound of titanium or vanadium, a compound of magnesium and optionally an electron donor compound and/or a particulate inorganic oxide as a support material.

As titanium compounds, use is generally made of the halides or alkoxides of trivalent or tetravalent titanium, with titanium alkoxy halogen compounds or mixtures of various titanium compounds also being possible. Examples of suitable titanium compounds are TiBr₃, TiBr₄, TiCl₃, TiCl₄, Ti(OCH₃)Cl₃, Ti(OC₂H₅)Cl₃, Ti(O-i-C₃H₇)Cl₃, Ti(O-n-C₄H₃)C₁₃, Ti(OC₂H₅)Br₃, Ti(O-n-C₄H₉)Br₃, Ti(OCH₃)₂Cl₂, Ti(OC₂H₅)₂C₁₂, Ti(O-n-C₄H₉)C₁₂, Ti(OC₂H₅)₂Br₂, Ti(OCH₃)₃Cl, Ti(OC₂H₅)₃Cl, Ti(O-n-C₄H₉)₃Cl, Ti(OC₂H₅)₃Br, Ti(OCH₃)₄, Ti(OC₂H₅)₄ or Ti(O-n-C₄H₉)₄. Preference is given to using titanium compounds which comprise chlorine as the halogen. Preference is likewise given to titanium halides which comprise only halogen in addition to titanium and among these especially titanium chlorides and in particular titanium tetrachloride. Among the vanadium compounds, particular mention may be made of the vanadium halides, the vanadium oxyhalides, the vanadium alkoxides and the vanadium acetylacetonates. Preference is given to vanadium compounds in the oxidation states 3 to 5.

In the production of the solid component, at least one compound of magnesium is preferably additionally used. Suitable compounds of this type are halogen-comprising magnesium compounds such as magnesium halides and in particular the chlorides or bromides and magnesium compounds from which the magnesium halides can be obtained in a customary way, e.g. by reaction with halogenating agents. For the present purposes, halogens are chlorine, bromine, iodine or fluorine or mixtures of two or more halogens, with preference being given to chlorine or bromine and in particular chlorine.

Possible halogen-comprising magnesium compounds are in particular magnesium chlorides or magnesium bromides. Magnesium compounds from which the halides can be obtained are, for example, magnesium alkyls, magnesium aryls, magnesium alkoxy compounds or magnesium aryloxy compounds or Grignard compounds. Suitable halogenating agents are, for example, halogens, hydrogen halides, SiCl₄ or CCl₄ and preferably chlorine or hydrogen chloride.

Examples of suitable, halogen-free compounds of magnesium are diethylmagnesium, di-n-propylmagnesium, diisopropylmagnesium, di-n-butylmagnesium, di-sec-butylmagnesium, di-tert-butylmagnesium, diamylmagnesium, n-butylethylmagnesium, n-butyl-sec-butylmagnesium, n-butyloctylmagnesium, diphenylmagnesium, diethoxymagnesium, di-n-propyloxymagnesium, diisopropyloxymagnesium, di-n-butyloxymagnesium, di-sec-butyloxymagnesium, di-tert-butyloxymagnesium, diamyloxymagnesium, n-butyloxyethoxymagnesium, n-butyloxy-sec-butyloxymagnesium, n-butyloxyoctyloxymagnesium and diphenoxymagnesium. Among these, preference is given to using n-butylethylmagnesium or n-butyloctylmagnesium.

Examples of Grignard compounds are methylmagnesium chloride, ethylmagnesium chloride, ethylmagnesium bromide, ethylmagnesium iodide, n-propylmagnesium chloride, n-propylmagnesium bromide, n-butylmagnesium chloride, n-butylmagnesium bromide, sec-butylmagnesium chloride, sec-butylmagnesium bromide, tert-butylmagnesium chloride, tert-butylmagnesium bromide, hexylmagnesium chloride, octylmagnesium chloride, amylmagnesium chloride, isoamylmagnesium chloride, phenylmagnesium chloride and phenylmagnesium bromide.

As magnesium compounds for producing the particulate solids, preference is given to using, apart from magnesium dichloride or magnesium dibromide, the di(C₁-C₁₀-alkyl)magnesium compounds. Preferably, the Ziegler- or Ziegler-Natta-catalyst comprises a transition metal selected from titanium, zirconium, vanadium, chromium.

Suitable electron donor compounds for preparing Ziegler type catalysts are for example alcohols, glycols, esters, ketones, amines, amides, nitriles, alkoxysilanes and aliphatic ethers. These electron donor compounds can be used alone or in mixtures with each other as well as with additional electron donor compounds.

Preferred alcohols are those of formula R¹OH in which the R¹ group is a C₁-C₂₀ hydrocarbon group. Preferably, R¹ is a C₁-C₁₀ alkyl group. Specific examples are methanol, ethanol, iso-propanol and n-butanol. Preferred glycols are those having a total number of carbon atoms lower than 50. Among them particularly preferred are the 1,2 or 1,3 glycols having a total number of carbon atoms lower than 25. Specific examples are ethylene glycol, 1,2-propylene glycol and 1,3-propylene glycol. Preferred esters are the alkyl esters of C₁-C₂₀ aliphatic carboxylic acids and in particular C₁-C₈ alkyl esters of aliphatic mono carboxylic acids such as ethyl acetate, methyl formate, ethyl formate, methyl acetate, propyl acetate, i-propyl acetate, n-butyl acetate, i-butyl acetate. Preferred amines are those of formula NR²₃ in which the R² groups are, independently, hydrogen or a C₁-C₂₀ hydrocarbon group with the proviso that the R² groups are not simultaneously hydrogen. Preferably, R² is a C₁-C₁₀ alkyl group. Specific examples are diethylamine, diisopropylamine and triethylamine. Preferred amides are those of formula R³CONR⁴₂ in which R³ and R⁴ are, independently, hydrogen or a C₁-C₂₀ hydrocarbon group. Specific examples are formamide and acetamide. Preferred nitriles are those of formula R¹CN where R¹ has the same meaning given above. A specific example is acetonitrile. Preferred alkoxysilanes are those of formula R⁵ₐR⁶_{b}Si(OR⁷)_{c}, where a and b are integers from 0 to 2, c is an integer from 1 to 4 and the sum (a+b+c) is 4; and R⁵, R⁶, and R⁷, are alkyl, cycloalkyl or aryl radicals with 1-18 carbon atoms optionally containing heteroatoms. Particularly preferred are the silicon compounds in which a is 0 or 1, c is 2 or 3, R⁶ is an alkyl or cycloalkyl group, optionally containing heteroatoms, and R⁷ is methyl. Examples of such preferred silicon compounds are methyltrimethoxysilane, dimethyldimethoxysilane, trimethylmethoxysilane and t-butyltrimethoxysilane.

Preferred electron donor compounds are selected from the group consisting of amides, esters, and alkoxysilanes.

Catalysts of the Ziegler type are usually polymerized in the presence of a cocatalyst. Preferred cocatalysts are organometallic compounds of metals of Groups 1, 2, 12, 13 or 14 of the Periodic Table of Elements, in particular organometallic compounds of metals of Group 13 and especially organoaluminum compounds. Preferred cocatalysts are for example organometallic alkyls, organometallic alkoxides, or organometallic halides.

Preferred organometallic compounds comprise lithium alkyls, magnesium or zinc alkyls, magnesium alkyl halides, aluminum alkyls, silicon alkyls, silicon alkoxides and silicon alkyl halides. More preferably, the organometallic compounds comprise aluminum alkyls and magnesium alkyls. Still more preferably, the organometallic compounds comprise aluminum alkyls, preferably trialkylaluminum compounds. Preferably, the aluminum alkyls comprise, for example, trimethyl-aluminum, triethylaluminum, tri-isobutylaluminum, tri-n-hexylaluminum and the like.

The process of the present disclosure is characterized in that the polymerization is carried out in a gas-phase polymerization reactor comprising three or more polymerization zones which differ in the ratio of hydrogen to the sum of olefins in the reaction gas mixture within the polymerization zones. According to the process of the present disclosure, a gas-phase polymerization reactor has to be understood as one container in which the polymerization is carried out in one interconnected gas-phase. Accordingly, the pressures in the different polymerization zones within this container are essentially the same, apart from pressure differences resulting from flow resistances in gas-phases having high flow velocities, and the conditions in the polymerization zones cannot be varied independently.

A polymerization zone is a part of the gas-phase polymerization reactor in which the polymerization takes place under identical or substantially identical conditions. For a polymerization, in which a thorough mixing of the polymer particles occurs, e.g. a polymerization in a fluidized-bed or in a stirred bed of polymer particles, the polymerization zone is the volume of this mixed bed of polymer particles. For a polymerization, in which the polymer particles are transported through a part of the reactor, a polymerization zone is the volume between two subsequent feeding points for monomer or for hydrogen or for a combination of monomer and hydrogen. A monomer feeding point is then defined as a position along the path of the transported polymer particles or a height of a vertically oriented reactor part of the polymerization reactor at which the main monomer and optionally one or more comonomers or a combination of the main monomer, optionally one or more comonomers and hydrogen are fed into the reactor through one or more feeding lines.

The ratio of the concentration of hydrogen to the concentration of the combined olefins in the reaction gas mixture of the respective polymerization zone determines the molecular weight of the produced polyolefin. A larger ratio of hydrogen to the sum of olefins results in a lower molecular weight of the obtained polyolefin; a smaller ratio gives a higher molecular weight. By polymerizing in multiple polymerization zones having different ratios of hydrogen to the sum of olefins in the reaction gas mixture of the polymerization zones, the molecular weight distribution of the produced polyolefins is broadened.

The polymerization of the present disclosure is characterized in that it is carried out in at least three polymerization zones which differ in the ratio of hydrogen to the sum of olefins in the reaction gas mixture within the polymerization zones, expressed as ratios of the volume fractions. At least one of the polymerization zones has a ratio of hydrogen to the sum of olefins which is by a factor of at least 1.5 lower than the ratio of hydrogen to the sum of olefins in the polymerization zone having the highest ratio of hydrogen to the sum of olefins and which is by a factor of at least 1.5 higher than the ratio of hydrogen to the sum of olefins in the polymerization zone having the lowest ratio of hydrogen to the sum of olefins. Accordingly, the ratio of hydrogen to the sum of olefins in the polymerization zone having the highest ratio of hydrogen to the sum of olefins and in the polymerization zone having the lowest ratio of hydrogen to the sum of olefins differ at least by a factor of 2.25. In a preferred embodiment of the present disclosure, at least one polymerization zone has a ratio of hydrogen to the sum of olefins which is by a factor of at least 2 lower than the ratio of hydrogen to the sum of olefins in the polymerization zone having the highest ratio of hydrogen to the sum of olefins and which is by a factor of at least 2 higher than the ratio of hydrogen to the sum of olefins in the polymerization zone having the lowest ratio of hydrogen to the sum of olefins.

In polymerization zones, in which the polymer particles are transported through a part of the reactor, the ratio of hydrogen to the sum of olefins may vary within this polymerization zone, especially for polymerizations in the presence of one or more inert components. As the reaction gas mixture moves along, the one or more olefins are consumed by polymerization while the concentration of hydrogen remains essentially constant. Consequently, the volume fraction(s) of the olefin(s) may decrease while the concentration of hydrogen remains essentially constant. In such a case, the olefin concentration according to the present disclosure in this polymerization zone is the average of the maximum olefin concentration in this polymerization zone and the minimum olefin concentration in this polymerization zone; i.e. the sum of the maximum olefin concentration and the minimum olefin concentration divided by two.

In an embodiment of the present disclosure, the gas-phase reactor has more than three polymerization zones, i.e. four, five, six, seven or more polymerization zones. In a preferred embodiment, all polymerization zones differ in the ratio of hydrogen to the sum of olefins in the reaction gas mixture in the polymerization zones. In another preferred embodiment, two or more polymerization zones have the same or a similar ratio of hydrogen to the sum of olefins in the reaction gas mixture in the polymerization zones. Accordingly, two or more polymerization zones may have a ratio of hydrogen to the sum of olefins which is identical or similar to the ratio of hydrogen to the sum of olefins of the polymerization zone having the highest ratio of hydrogen to the sum of olefins and/or two or more polymerization zones may have a ratio of hydrogen to the sum of olefins which is identical or similar to the ratio of hydrogen to the sum of olefins of the polymerization zone having the lowest ratio of hydrogen to the sum of olefins and/or two or more polymerization zones may have a ratio of hydrogen to the sum of olefins which is by a factor of at least 1.5 lower than the ratio of hydrogen to the sum of olefins in the polymerization zone having the highest ratio of hydrogen to the sum of olefins and which is by a factor of at least 1.5 higher than the ratio of hydrogen to the sum of olefins in the polymerization zone having the lowest ratio of hydrogen to the sum of olefins.

At least two of the polymerization zones of the process of the present disclosure are sub-zones of a polymerization unit in which the growing polymer particles flow downward in a densified form. Such a polymerization unit, in which the growing polymer particles flow downward in a densified form, is frequently called "downcomer". Other common designations for such a polymerization unit are "moving bed" or "settled bed" unit or reactor.

Throughout the present disclosure, the term "densified form" of the polymer means that the ratio between the mass of polymer and the reactor volume is higher than 80% of the "poured bulk density" of the resulting polymer. Thus, for instance, in the case of a polymer bulk density equal to 420 kg/m³, a "densified form" of the polymer implies that the polymer mass/reactor volume ratio is at least 336 kg/m³. The "poured bulk density" of a polymer is a parameter well known to the person skilled in the art: it can be measured according to DIN EN ISO 60 : 1999. The density of solid inside the reactor is defined as the mass of polymer per volume of reactor occupied by the polymer.

Typically, a downcomer is a polymerization unit containing a bed of growing polymer particles, which moves downwards in a substantially plug flow mode. By "plug flow mode" it is meant that there is little or preferably no backmixing of the polymer particles. In a preferred embodiment of the process according to the present disclosure, the polymer particles flow downwards in the downcomer with a velocity of from 0.01 to 0.7 m/s, preferably from 0.1 to 0.6 m/s, and more preferably from 0.15 to 0.5 m/s.

For replacing reacted olefins and for controlling the gas flow within the downcomer, gaseous or liquid feed streams may be introduced at one or more positions into the downcomer. The feed streams preferably comprise the main monomer and may further comprise one or more comonomers, inert components such as propane, or hydrogen. Depending on the amounts of added gaseous or liquid feed streams to the downcomer and the pressure conditions within the downcomer, the gaseous medium surrounding the polymer particles can be designed to move downwards concurrently with the polymer particles or upward countercurrently to the polymer particles. When feeding liquid streams to the downcomer, these liquid streams preferably vaporize within the downcomer, contributing to the composition of the reaction gas mixture within the downcomer. When operating the downcomer with more than one feed stream, the feeding points for introducing the feed streams into the downcomer are preferably evenly distributed over the height of the downcomer.

In a preferred embodiment of the present disclosure, the bottom of the downcomer is equipped with a control valve for controlling the flow of the growing polymer particles from the downcomer into the riser. The control valve is preferably a mechanical valve, such as a simple or double butterfly valve or a ball valve. Preferably a stream of a gas, sometimes denominated as "dosing gas", is fed into the lower part of the downcomer at one or more positions shortly above the control valve to facilitate the flow of the growing polymer particles through the control valve. The dosing gas is preferably taken from a recycling stream of unreacted monomers downstream of the compressor. By varying the opening of the control valve and/or varying the flow rate of the dosing gas, it is possible to adjust the velocity of the polymer particles within the downcomer.

According to the process of the present disclosure, the polymerization unit, in which the growing polymer particles flow downward in a densified form, has at least two sub-zones which differ in the ratio of hydrogen to the sum of olefins in the reaction gas mixtures within these sub-zones. The different gas compositions can be established by introducing appropriated liquid or gaseous feed streams into a middle part of the downcomer. In case of an overall downward gas stream, the gas composition in a lower part of the downcomer is then a combination of the gas streaming downwards through the upper part of the downcomer and the gas components derived from the additionally injected liquid or gaseous feed streams dosed into the middle part(s) of the downcomer. In case of an overall upward gas stream, the gas composition in an upper part of the downcomer is then a combination of the gas streaming upwards through the lower part of the downcomer and the gas components derived from the additionally injected liquid or gaseous feed streams dosed into the middle part(s) of the downcomer. In another embodiment of the present disclosure, a major part of the streams fed to the downcomer are fed to a middle part of the downcomer and so creating an upward gas stream in one or more upper sub-zones of the downcomer and creating a downward gas stream in one or more lower sub-zones of the downcomer. The appropriate gas compositions in the respective sub-zones can then be established by feeding in the vicinity of the feeding point(s) of the major part of feed stream(s) additional feed streams for creating the intended gas composition of the reaction gas mixtures.

In a preferred embodiment of the present disclosure, the gaseous medium surrounding the polymer particles moves downwards concurrently with the polymer particles. The gas composition in a lower part of the downcomer is accordingly a combination of the gas streaming downwards through the upper part of the downcomer and the gas components derived from the additionally injected liquid or gaseous feed streams dosed into the middle part(s) of the downcomer.

In the process of the present disclosure, the growing polymer particles enter the downcomer at the top and leave the downcomer at the bottom. Accordingly, the process includes a step of transporting growing polymer particle from the outlet of the downcomer to the inlet of the downcomer. The unit of the polymerization reactor which accomplishes the transport of the polymer particles from the outlet of the downcomer to the inlet of the downcomer forms one of the polymerization zones within the gas-phase polymerization reactor. In an embodiment of the present disclosure, the transport of the growing polymer particles from the outlet of the downcomer to the inlet of the downcomer occurs by a unit operating as a fluidized bed reactor. In such an embodiment, the downcomer may be positioned within, around or adjacent to the gas-phase reactor.

Fluidized-bed reactors are reactors in which the polymerization takes place in a bed of polymer particles which is maintained in a fluidized state by feeding in a reaction gas mixture at the lower end of the reactor, usually below a gas distribution grid having the function of dispensing the gas flow, and taking off the gas again at its upper end. The reaction gas mixture is then returned to the lower end of the reactor via a recycle line equipped with a compressor and a heat exchanger for removing the heat of polymerization. The velocity of the reaction gas mixture has to be sufficiently high firstly to fluidize the mixed bed of finely divided polymer present in the tube serving as polymerization zone and secondly to remove the heat of polymerization effectively.

In another, preferred embodiment, the transport of the growing polymer particle from the outlet of the downcomer to the inlet of the downcomer occurs by a riser; that means occurs by a polymerization unit operating under fast fluidization or transportation conditions. Fast fluidization conditions inside the riser are established by feeding a reaction gas mixture at a velocity higher than the transport velocity of the polymer particles. The velocity of the reaction gas mixture is generally comprised between 0.5 and 15 m/s, preferably between 0.8 and 5 m/s. The terms "transport velocity" and "fast fluidization conditions" are well known in the art. For a definition of those terms see, for example, "D. Geldart, Gas Fluidization Technology, page 155 et seq., J. Wiley & Sons Ltd., 1986".

In a most preferred embodiment of the present disclosure, the gas-phase polymerization reactor is a multizone circulating reactor. Such reactors are, for example, described in WO 97/04015 A1 and WO 00/02929 A1 and have two interconnected polymerization zones, a riser, in which the growing polymer particles flow upward under fast fluidization or transport conditions and a downcomer, in which the growing polymer particles flow in a densified form under the action of gravity. The polymer particles leaving the riser enter the downcomer and the polymer particles leaving the downcomer are reintroduced into the riser, thus establishing a circulation of polymer between the two polymerization zones and the polymer is passed alternately a plurality of times through these two zones. In such polymerization reactors, a solid/gas separator is arranged above the downcomer to separate the polyolefin and reaction gaseous mixture coming from the riser. The growing polyolefin particles enter the downcomer and the separated reaction gas mixture of the riser is continuously recycled through a gas recycle line to one or more points of reintroduction into the polymerization reactor. Preferably, the major part of the recycle gas is recycled to the bottom of the riser. The recycle line is preferably equipped with a compressor and a heat exchanger for removing the heat of polymerization. Preferably, a line for the catalyst feed is arranged on the riser and a polymer discharge system is located in the bottom portion of the downcomer. The introduction of make-up monomers, comonomers, hydrogen and/or inert components may occur at various points along the riser and the downcomer.

Carrying out the polymerization in a polymerization reactor comprising a riser for transporting the growing polymer particle from the outlet of the downcomer to the inlet of the downcomer brings about the advantage that all growing polymer particles pass repeatedly all polymerization zones of the polymerization reactor. It is so possible to produce within one gas-phase polymerization reactor homogeneous multi-modal olefin polymers with improved polymer property combinations.

For establishing different polymerization conditions between a polymerization zone, which accomplishes a transport of polymer particles from the outlet of the downcomer to the inlet of the downcomer, such as a riser or a polymerization zone comprising a fluidized bed of growing polymer particles, and the uppermost sub-zone of the downcomer, the reaction gas mixture leaving the transporting polymerization zone can be partially or totally prevented from entering the downcomer. This can for example be achieved by feeding a barrier fluid in form of a gas and/or liquid mixture into the downcomer, preferably in the upper part of the downcomer. The barrier fluid should have a suitable composition, different from that of the gas mixture present in the riser. The amount of added barrier fluid can be adjusted in a way that an upward flow of gas countercurrent to the flow of the polymer particles is generated, particularly at the top thereof, acting as a barrier to the gas mixture entrained with the particles coming from the riser.

The barrier fluid comes preferably from a recycle gas stream and is more preferably obtained by partly condensing the stream. As a consequence, the barrier fluid may contain, besides the monomers to be polymerized, also inert compounds used as a polymerization diluent like nitrogen or alkanes having from 1 to 10 carbon atoms, hydrogen or other components of the reaction gas mixture.

The preparation of the barrier fluid may be accomplished by separating off a part of the recycle gas stream, preferably downstream of the compressor and upstream of the heat exchanger comprised in the recycle line, passing the separated gas through a heat-exchanger for partly condensing and separating the resulting liquid-gas mixture in a liquid and a gaseous stream. The barrier fluid has preferably a composition that the gas produced by vaporizing the barrier fluid has less than 0.5 vol.% hydrogen, more preferably less than 0.2 vol.% hydrogen and especially less than 0.1 vol.% hydrogen. Preferably, a feed stream comprising ethylene and optionally one or more comonomers is introduced into the downcomer together with the barrier fluid or in close proximity to the feeding point of the barrier fluid.

In a preferred embodiment of the present disclosure, a part of the recycle gas stream, which is preferably withdrawn from the recycle line downstream of the compressor and upstream of the heat exchanger, is fed into a distillation column, into which this stream is separated into a liquid which can be withdrawn from the bottom of the distillation column and a gaseous fraction which can be withdrawn from the top of the distillation column. By employing a distillation column for producing the liquid to be fed as barrier fluid to the downcomer, a lower hydrogen content in this liquid is achievable than by using a single heat-exchanger in combination with a liquid-gas separator. It is further possible to use a combination of two or more distillation columns instead of a single distillation column.

Preferably, the barrier fluid is fed in liquid form into the upper part of the polymerization unit, in which the growing polymer particles flow downward in a densified form.

In an embodiment of the present disclosure, in which the gas-phase polymerization reactor has more than three polymerization zones which differ in the ratio of hydrogen to the sum of olefins in the reaction gas mixture in the polymerization zones, one polymerization zone is preferably formed by the unit transporting the growing polymer particle from the outlet of the downcomer to the inlet of the downcomer, preferably a riser or a unit comprising a fluidized bed of growing polymer particles, and the further polymerization zones of a different ratio of hydrogen to the sum of olefins are sub-zones established within the downcomer. Thus, in the process of the present disclosure, the downcomer may have two, three, four or more sub-zones having different ratios of hydrogen to the sum of olefins in the reaction gas mixtures. The downcomer may also have two, or more sub-zones which have the same or a very similar ratio of hydrogen to the sum of olefins in the reaction gas mixture. Preferably, the downcomer has two or three, more preferably two sub-zones which differ from each other in the ratio of hydrogen to the sum of olefins in the reaction gas mixture in the sub-zones by a factor of more than 1.5.

In a preferred embodiment of the present disclosure, the difference in the ratio of hydrogen to the sum of olefins in the reaction gas mixtures within the sub-zones of the polymerization unit, in which the growing polymer particles flow downward in a densified form, is obtained by feeding a part of a recycle gas stream to at least one of the sub-zones of the polymerization unit, in which the growing polymer particles flow downward in a densified form. Preferably, this recycle gas is introduced into the downcomer as component of a feed stream comprising ethylene and optionally one or more comonomers.

In a further preferred embodiment of the present disclosure, a part of the recycle gas stream, which is preferably withdrawn from the recycle line downstream of the compressor and upstream of the heat exchanger, is fed into a distillation column, into which this stream is separated into a liquid which can be withdrawn from the bottom of the distillation column and a hydrogen-rich gaseous fraction which can be withdrawn from the top of the distillation column and the difference in the ratio of hydrogen to the sum of olefins within the sub-zones of the polymerization unit, in which the growing polymer particles flow downward in a densified form, is obtained by feeding a part of the hydrogen-rich gaseous fraction withdrawn from the top of the distillation column to at least one of the sub-zones of the polymerization unit, in which the growing polymer particles flow downward in a densified form. It is further possible to use a combination of two or more distillation columns instead of a single distillation column. Preferably, this hydrogen-rich gas is introduced into the downcomer as component of a feed stream comprising ethylene and optionally one or more comonomers.

Preferably, the hold-up of polymer particles in the polymerization unit, in which the growing polymer particles flow downward in a densified form, is from 55 wt.% to 80 wt.% of the total hold-up of polymer particles in the gas-phase polymerization reactor.

The polymerization in the gas-phase polymerization reactor can also be carried out in a condensing or super-condensing mode, in which part of the circulating reaction gas mixture is cooled to below the dew point and returned to the reactor separately as a liquid and a gas-phase or together as a two-phase mixture in order to make additional use of the enthalpy of vaporization for cooling the reaction gas.

In a preferred embodiment of the present disclosure, the gas-phase polymerization reactor comprising three or more polymerization zones which differ in the ratio of hydrogen to the sum of olefins in the reaction gas mixture is part of a reactor cascade. The further polymerization reactors of the reactor cascade can be any kind of low-pressure polymerization reactors such as gas-phase reactors or suspension reactors. If the polymerization process of the reactor cascade includes a polymerization in suspension, the suspension polymerization is preferably carried out upstream of the gas-phase polymerization. Suitable reactors for carrying out such a suspension polymerization are for example loop reactors or stirred tank reactors. Suitable suspension media are inter alia inert hydrocarbons such as isobutane or mixtures of hydrocarbons or else the monomers themselves. Such additional polymerization stages, which are carried out in suspension, may also include a pre-polymerization stage. If the multistage polymerization of olefins comprises additional polymerization stages carried out in gas-phase, the additional gas-phase polymerization reactors can be any type of gas-phase reactors like horizontally or vertically stirred gas-phase reactors, fluidized-bed reactors or multizone circulating reactors. Such additional gas-phase polymerization reactors may be arranged downstream or upstream of the gas-phase polymerization reactor comprising three or more polymerization zones which differ in the ratio of hydrogen to the sum of olefins in the reaction gas mixture. In an especially preferred embodiment of the present disclosure, the gas-phase polymerization reactor comprising three or more polymerization zones which differ in the ratio of hydrogen to the sum of olefins in the reaction gas mixture is part of a reactor cascade in which a fluidized-bed polymerization reactor is arranged upstream of the gas-phase polymerization reactor comprising three or more polymerization zones.

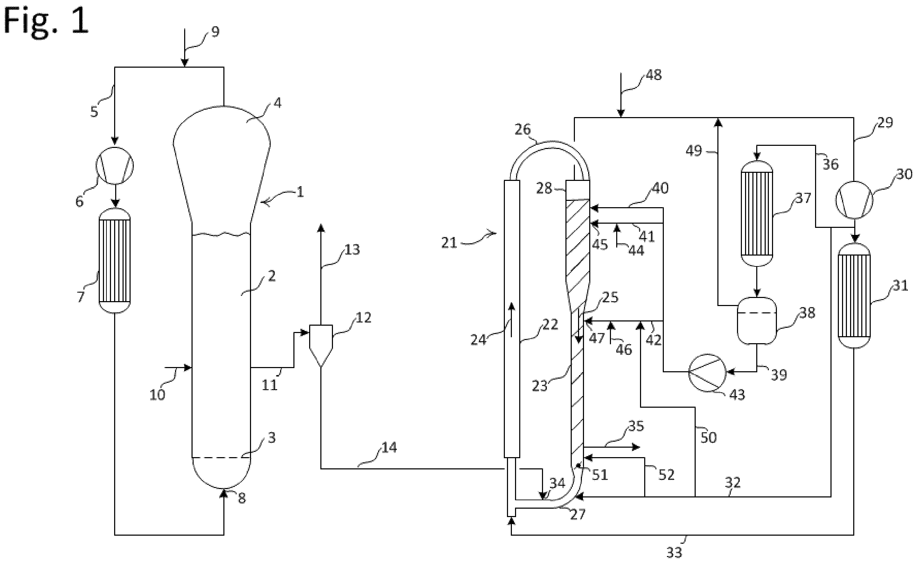

Figure 1 shows schematically a set-up of a polymerization reactor cascade comprising a fluidized-bed reactor and a multizone circulating reactor for carrying out the process of the present disclosure.

The first gas-phase reactor, fluidized-bed reactor (1), comprises a fluidized bed (2) of polyolefin particles, a gas distribution grid (3) and a velocity reduction zone (4). The velocity reduction zone (4) is generally of increased diameter compared to the diameter of the fluidized-bed portion of the reactor. The polyolefin bed is kept in a fluidization state by an upward flow of gas fed through the gas distribution grid (3) placed at the bottom portion of the reactor (1). The gaseous stream of the reaction gas mixture leaving the top of the velocity reduction zone (4) via recycle line (5) is compressed by compressor (6), transferred to a heat exchanger (7), in which it is cooled, and then recycled to the bottom of the fluidized-bed reactor (1) at a point below the gas distribution grid (3) at position (8). The recycle gas can, if appropriate, be cooled to below the dew point of one or more of the recycle gas components in the heat exchanger so as to operate the reactor with condensed material, i.e. in the condensing mode. The recycle gas can comprise, besides unreacted monomers, inert condensable gases, such as alkanes, as well as inert non-condensable gases, such as nitrogen. Make-up monomers, hydrogen, and optional inert gases or process additives can be fed into the reactor (1) at various positions, for example via line (9) upstream of the compressor (6). Generally, the catalyst is fed into the reactor (1) via a line (10) that is preferably placed in the lower part of the fluidized bed (2).

The polyolefin particles obtained in fluidized-bed reactor (1) are discontinuously discharged via line (11) and fed to a solid/gas separator (12) in order to avoid that the gaseous mixture coming from the fluidized-bed reactor (1) enters the second gas-phase reactor. The gas leaving solid/gas separator (12) exits the reactor via line (13) as off-gas while the separated polyolefin particles are fed via line (14) to the second gas-phase reactor.

The second gas-phase reactor is a multizone circulating reactor (21) comprising a riser (22) and a downcomer (23) which are repeatedly passed by the polyolefin particles. Within riser (22), the polyolefin particles flow upward under fast fluidization conditions along the direction of arrow (24). Within the downcomer (23) the polyolefin particles flow downward under the action of gravity along the direction of the arrow (25). The riser (22) and the downcomer (23) are appropriately interconnected by the interconnection bends (26) and (27).

After flowing through the riser (22), the polyolefin particles and the reaction gas mixture leave riser (22) and are conveyed to a solid/gas separation zone (28). This solid/gas separation can be effected by using conventional separation means such as, for example, a centrifugal separator like a cyclone. From the separation zone (28) the polyolefin particles enter downcomer (23).

The reaction gas mixture leaving the separation zone (28) is recycled to the riser (22) by means of a recycle line (29), equipped with a compressor (30) and a heat exchanger (31). Between the compressor (30) and the heat exchanger (31), the recycle line (29) splits and the gaseous mixture is divided into two separated streams: line (32) conveys a part of the recycle gas into the interconnection bend (27), while line (33) conveys another part the recycle gas to the bottom of riser (22), so as to establish fast fluidization conditions therein.

The polyolefin particles coming from the first gas-phase reactor via line (14) enter multizone circulating reactor (21) at the interconnection bend (27) in position (34). The polyolefin particles obtained in multizone circulating reactor (21) are continuously discharged from the bottom part of downcomer (23) via the discharge line (35).

A part of the gaseous mixture leaving the separation zone (28) exits the recycle line (29) after having passed the compressor (30) and is sent through line (36) to the heat exchanger (37), where it is cooled to a temperature at which the monomers and the optional inert gas are partially condensed. A separating vessel (38) is placed downstream of the heat exchanger (37). The separated liquid is withdrawn from the separating vessel (38) via line (39) and fed to downcomer (23) through lines (40), (41) and (42) by means of a pump (43), wherein the feed stream introduced via line (40) is supplied to generate the barrier for preventing the reaction gas mixture of the riser (22) from entering the downcomer (23). Make-up monomers, make-up comonomers, and optionally inert gases and/or process additives can be introduced via line (44) into line (41) and then fed into downcomer (23) at dosing point (45) and can be introduced via line (46) into line (42) and then fed into the downcomer (23) at dosing point (47). Make-up monomers, make-up comonomers, and optionally inert gases and/or process additives can further be introduced into recycle line (29) via line (48). The gaseous mixture obtained as gas-phase in separating vessel (38) is recirculated to the recycle line (29) through line (49). Line (50) serves for additionally feeding amounts of the recycle gas mixture to dosing point (47).

The bottom of the downcomer (23) is equipped with a control valve (51) having an adjustable opening for adjusting the flow of polyolefin particles from downcomer (23) through interconnection bend (27) into the riser (22). Above the control valve (51), amounts of a recycle gas mixture coming from the recycle line (29) through line (52) are introduced into the downcomer (23) to facilitate the flow of the polyolefin particles through the control valve (51).

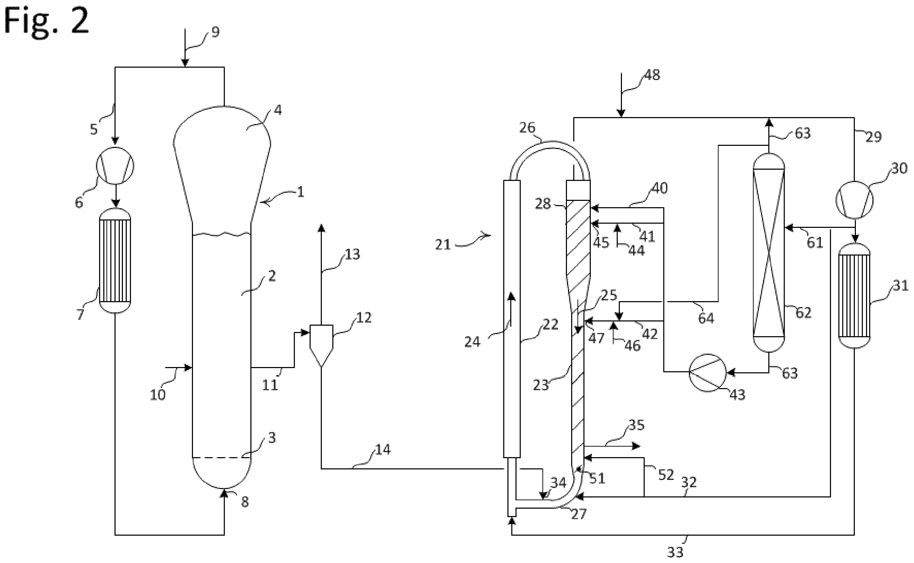

Figure 2 shows schematically another set-up of a polymerization reactor cascade comprising a fluidized-bed reactor and a multizone circulating reactor for carrying out the process of the present disclosure which differs from the set-up displayed in Figure 1 by the manner of obtaining from the recycle gas stream a liquid for being fed into downcomer (23).

A part of the gaseous mixture leaving separation zone (28) exits recycle line (29) after having passed compressor (30) and is sent via line (61) to a distillation column (62) for being separated into a liquid and a gaseous fraction. The liquid withdrawn from the bottom of distillation column (62) via line (63) is fed to downcomer (23) through lines (40), (41) and (42) by means of pump (43), wherein the feed stream introduced via line (40) is supplied to generate the barrier for preventing the reaction gas mixture of riser (22) from entering downcomer (23). The gaseous mixture withdrawn from the top of distillation column (62) is recirculated to recycle line (29) through line (63). A part of the gaseous mixture withdrawn from the top of distillation column (62) is further fed via line (64) to dosing point (47).

The process of the present disclosure is particularly suitable for the preparation of polyethylenes having a density of from 0.916 to 0.964 g/cm³, more preferably from 0.935 to 0.960 g/cm³, determined according to DIN EN ISO 1183-1:2004, Method A (Immersion), and a MFR_{21.6} at a temperature of 190 °C under a load of 21.6 kg, determined according to DIN EN ISO 1133-1:2012-03, of from 0.5 to 300 g/10 min, more preferably of from 1 to 100 g/10 min, even more preferably of from 1.2 to 100 g/10 min and especially of from 1.5 to 50 g/10 min. Such polyethylenes are especially suitable for preparing blow molded articles.

### EXAMPLES

The melt flow rate MFR_{21.6} was determined according to DIN EN ISO 1133-1:2012-03 at a temperature of 190 °C under a load of 21.6 kg.

The melt flow rate MFR₅ was determined according to DIN EN ISO 1133-1:2012-03 at a temperature of 190 °C under a load of 5 kg.

The melt flow rate MFR_{2.16} was determined according to DIN EN ISO 1133-1:2012-03 at a temperature of 190 °C under a load of 2.16 kg.

The Flow Rate Ratio FRR is the ratio of MFR_{21.6} / MFR₅.

The density was determined according to DIN EN ISO 1183-1:2004, Method A (Immersion) with compression molded plaques of 2 mm thickness. The compression molded plaques were prepared with a defined thermal history: pressed at 180 °C, 20 MPa for 8 min with subsequent crystallization in boiling water for 30 min.

The swell ratio was measured in a high-pressure capillary rheometer (Rheograph25, Göttfert Werkstoff-Prüfmaschinen GmbH, Buchen, Germany) at a shear rate of 1440 s⁻¹ in a 30/2/2/20 round-perforation die with conical inlet (angle = 20°, D = 2mm, L = 2mm, total length = 30 mm) at a temperature of 190 °C, using a laser-diode placed at a distance of 78 mm from the die exit. The extrudate was cut (by an automatic cutting device from Göttfert) at a distance of 150 mm from the die-exit, at the moment the piston reaches a position of 96 mm from the die-inlet. Swell ratio (SR) [%] is defined as difference (dₘₐₓ - d_{d}) x 100 divided by d_{d} with dₘₐₓ being the maximum diameter of the strand and d_{d} being the diameter of the die; SR = (dₘₐₓ-d_{d}) 100% / d_{d}.

The environmental stress cracking resistance was determined by a full notch creep test (FNCT) in accordance with international standard ISO 16770:2004 in aqueous surfactant solution. From the polymer sample, a compression molded 10 mm thick sheet was prepared. The bars with squared cross sections (10x10x100 mm) were notched using a razor blade on four sides perpendicularly to the stress direction. A notching device as described in M. Fleissner in Kunststoffe 77 (1987), pp. 45 was used for the sharp notch with a depth of 1.6 mm. The load applied was calculated from tensile force divided by the initial ligament area. Ligament area was the remaining area = total cross-section area of specimen minus the notch area. For FNCT specimen: 10x10 mm² - 4 times of trapezoid notch area = 46.24 mm² (the remaining cross-section for the failure process/crack propagation). The test specimen was loaded using standard conditions as suggested by the ISO 16770 with constant load of 4 MPa at 80 °C in an aqueous solution of 2% by weight of ARKOPAL N100. The elapsed time until the rupture of the test specimen was detected.

### Example 1

A polyethylene was prepared in a cascade of a fluidized-bed reactor and a multizone circulating reactor (MZCR) having two interconnected reaction zones as shown in Figure 1, where the downcomer of the MZCR had two sub-zones having a different ratio of hydrogen to the sum of olefins in the reaction gas mixture.

9.1 g/h of a Ziegler-Natta catalyst, which was prepared according to Example 1a of WO 2014/202420 A1 with a molar feed ratio of electron donor/Ti of 8, were fed using 5 kg/h of liquid propane to a first stirred precontacting vessel, into which triisobutylaluminum (TIBA), diethylaluminum chloride (DEAC) and tetrahydrofuran (THF) were dosed. The weight ratio of triisobutylaluminum to diethylaluminum chloride was 7:1. The weight ratio of the aluminum alkyls to the catalyst solid was 5:1. The weight ratio of the aluminum alkyls to THF was 70:1. The first precontacting vessel was kept at 50 °C with a residence time of 30 minutes. The catalyst suspension of the first precontacting vessel was continuously transferred to a second stirred precontacting vessel, which was operated with a residence time of 30 minutes and kept at 50 °C. The catalyst suspension was then transferred continuously to fluidized-bed reactor (1) via line (10).

In the fluidized-bed reactor (1), ethylene was polymerized in the presence of propane as an inert diluent using hydrogen as a molecular weight regulator. 42 kg/h of ethylene and 120 g/h of hydrogen were fed to the fluidized-bed reactor (1) via line (9). No comonomer was added. The polymerization was carried out at a temperature of 80 °C and a pressure of 2.9 MPa. The selected feed rates resulted in the reactor in an ethylene concentration of 11.1 vol.% and a hydrogen concentration of 14.4 vol.%.

The polyethylene obtained in the fluidized-bed reactor (1) had an MFR_{2.16} of 8 g/10 min and a density of 0.967 g/cm³.

The polyethylene obtained in fluidized-bed reactor (1) was continuously transferred to multizone circulating reactor (21), which was operated at a pressure of 2.5 MPa and a temperature of 85 °C measured at the beginning of line (29) where the reaction gas mixture has just left separation zone (28). The riser (22) had an internal diameter of 200 mm and a length of 19 m. The downcomer (23) had a total length of 18 m, an upper part of 5 m with an internal diameter of 300 mm and a lower part of 13 m with an internal diameter of 150 mm. The final polymer was discontinuously discharged via line (35).

To prevent the reaction gas mixture of the riser (22) from entering the downcomer (23), 330 kg/h of a liquid stream were fed as barrier fluid into the upper part of the downcomer via line (40). The liquid for generating the barrier originated from partially condensing recycle gas mixture in heat exchanger (37) at working conditions of 52 °C and 2.5 MPa and separating liquid and gaseous components in separating vessel (38). The liquid barrier fluid had a composition that the gas produced by vaporizing the barrier fluid had 6.5 vol.% ethylene, 0.12 vol.% hydrogen, 1.2 vol.% 1-hexene and 92 vol.% propane.

The monomers to the downcomer were fed in two positions; at a first dosing point (45) located just below the barrier and at a second dosing point (47) located 3 meters below the first dosing point. At the first dosing point (45), 15 kg/h of liquid coming from separating vessel (38), 12 kg/h of ethylene and 1.15 kg/h of 1-hexene, both fed via line (44), were introduced into the downcomer. At the second dosing point (47), 15 kg/h of liquid coming from separating vessel (38) and 6 kg/h of ethylene, fed via line (46), were introduced into the downcomer. To arrive at higher hydrogen content in the lower part of downcomer (23) than in its upper part, 3 kg/h of the recycle gas composition were dosed to the second dosing point (47) via line (50). Additionally, 5 kg/h of propane, 22.3 kg/h of ethylene and 30 g/h of hydrogen were fed through line (48) into recycle line (29).

Of the final olefin polymer produced in the cascade of fluidized-bed reactor and a multizone circulating reactor, 50% by weight were produced in the first reactor and 50% by weight were produced in the second reactor.

The concentrations of monomers and hydrogen of the reaction gas mixtures within the riser and the downcomer of the MZCR are indicated in Table 1. Table 1 further reports the properties of the final olefin polymer discharged from the multizone circulating reactor.

### Example 2

The polymerization of Example 1 was repeated under identical conditions except that the liquid for being fed into downcomer (23) originated from a distillation column (62) as shown in Figure 2. Furthermore, the gas mixture introduced at the second dosing point (47) in order to increase the hydrogen concentration in the lower part of the downcomer (23) came from the top of distillation column (62).

The liquid barrier fluid had a composition that the gas produced by vaporizing the barrier fluid had 6.5 vol.% ethylene, 0.04 vol.% hydrogen, 1.2 vol.% 1-hexene and 92 vol.% propane.

Additional monomers were fed to the downcomer at two positions, at a first dosing point (45) located just below the barrier and at a second dosing point (47) located 3 meters below the first dosing point. At the first dosing point (45), 15 kg/h of liquid coming from the bottom of distillation column (62), 12 kg/h of ethylene and 1.15 kg/h of 1-hexene, both fed via line (44), were introduced into the downcomer. At the second dosing point (47), 15 kg/h of liquid coming from the bottom of distillation column (62) and 6 kg/h of ethylene, fed via line (46), were introduced into the downcomer. To arrive at higher hydrogen content in the lower part of downcomer (23) than in its upper part, 2 kg/h of the gas coming from the top of distillation column (62) were dosed to the second dosing point (47) via line (64). Additionally, 5 kg/h of propane, 22.3 kg/h of ethylene and 35 g/h of hydrogen were fed through line (48) into recycle line (29).

The concentrations of monomers and hydrogen of the reaction gas mixtures within the riser and the downcomer of the MZCR are indicated in Table 1. Table 1 further reports the properties of the final olefin polymer discharged from the multizone circulating reactor.

### Comparative Example A

The polymerization of Example 1 was repeated under identical conditions except that no recycle gas were dosed to the second dosing point (47) via line (50) in order to keep the composition of the reaction gas mixture within the downcomer essentially constant over the whole length of the downcomer.

The liquid barrier fluid had a composition that the gas produced by vaporizing the barrier fluid had 6.4 vol.% ethylene, 0.16 vol.% hydrogen, 1.2 vol.% 1-hexene and 92 vol.% propane.

At the first dosing point (45), 15 kg/h of liquid coming from separating vessel (38), 12 kg/h of ethylene and 1.15 kg/h of 1-hexene, both fed via line (44), were introduced into the downcomer. At the second dosing point (47), 15 kg/h of liquid coming from separating vessel (38) and 6 kg/h of ethylene, fed via line (46), however not recycle gas, were introduced into the downcomer. Additionally, 5 kg/h of propane, 22.3 kg/h of ethylene and 28 g/h of hydrogen were fed through line (48) into the recycle line (29).

The concentrations of monomers and hydrogen of the reaction gas mixtures within the riser and the downcomer of the MZCR are indicated in Table 1. Table 1 further reports the properties of the final olefin polymer discharged from the multizone circulating reactor.

### Comparative Example B

The polymerization of Example 1 was repeated under identical conditions except that the composition of the reaction gas mixture in the lower part of the downcomer was adapted to the reaction gas composition in the riser.

The liquid barrier fluid had a composition that the gas produced by vaporizing the barrier fluid had 6.6 vol.% ethylene, 0.13 vol.% hydrogen, 1.3 vol.% 1-hexene and 92 vol.% propane.

At the first dosing point (45), 15 kg/h of liquid coming from separating vessel (38), 12 kg/h of ethylene and 1.15 kg/h of 1-hexene, both fed via line (44), were introduced into the downcomer. At the second dosing point (47), 15 kg/h of liquid coming from separating vessel (38) and 6 kg/h of ethylene, fed via line (46), were introduced into the downcomer. To arrive at higher hydrogen content in the lower part of downcomer (23) than in its upper part, 10 kg/h of the recycle gas composition were dosed to the second dosing point (47) via line (50). Additionally, 5 kg/h of propane, 22.3 kg/h of ethylene and 30 g/h of hydrogen were fed through line (48) into recycle line (29).

The concentrations of monomers and hydrogen of the reaction gas mixtures within the riser and the downcomer of the MZCR are indicated in Table 1. Table 1 further reports the properties of the final olefin polymer discharged from the multizone circulating reactor.

The comparison between Examples 1 and 2 and Comparative Examples A and B shows that by carrying out an olefin polymerization in a gas-phase polymerization reactor having three polymerization zones, which differ in the ratio of hydrogen to the sum of olefins by more than a factor of 1.5, it is possible to obtain olefin polymers having a higher swell ratio and a significantly increased environmental stress crack resistance compared to olefin polymer having essentially the same density, melt flow rate, and breadth of the molecular weight distribution but being obtained by polymerization in a gas-phase polymerization reactor having two polymerization zones.

**Table 1**

| | Example 1 | Example 2 | Comparative Example A | Comparative Example B |
|---|---|---|---|---|
| **Riser** | | | | |
| Ethylene [vol.%] | 13.0 | 13.0 | 12.9 | 13.3 |
| Hydrogen [vol.%] | 1.56 | 2.18 | 1.61 | 1.33 |
| 1-Hexene [vol.%] | 0.60 | 0.60 | 0.63 | 0.65 |
| Ratio hydrogen/sum of olefins | 0.115 | 0.160 | 0.119 | 0.095 |

| **Downcomer; upper polymerization zone** | | | | |
|---|---|---|---|---|
| Ethylene [vol.%] | 5.9 | 6.2 | 5.6 | 5.8 |
| Hydrogen [vol.%] | 0.13 | 0.044 | 0.14 | 0.11 |
| 1-Hexene [vol.%] | 0.83 | 0.87 | 0.87 | 0.89 |
| Ratio hydrogen/sum of olefins | 0.019 | 0.006 | 0.022 | 0.016 |

| **Downcomer; lower polymerization zone** | | | | |
|---|---|---|---|---|
| Ethylene [vol.%] | 5.9 | 6.1 | 6.0 | 6.0 |
| Hydrogen [vol.%] | 0.35 | 0.34 | 0.12 | 0.65 |
| 1-Hexene [vol.%] | 0.68 | 0.68 | 0.68 | 0.69 |
| Ratio hydrogen/sum of olefins | 0.053 | 0.050 | 0.018 | 0.097 |

| **Hydrogen ratios** | | | | |
|---|---|---|---|---|
| Highest ratio hydrogen/sum of olefins / intermediate ratio hydrogen/sum of olefins | 2.2 | 3.2 | 5.4 | 1.0 |
| Intermediate ratio hydrogen/sum of olefins / lowest ratio hydrogen/sum of olefins | 2.8 | 8.3 | 1.2 | 5.9 |

| **Final polymer properties:** | | | | |
|---|---|---|---|---|
| MFR_{21.6} [g/10 min] | 7.8 | 8.0 | 8.2 | 8.1 |
| FRR | 20 | 21 | 19 | 19 |
| Density [g/cm³] | 0.947 | 0.947 | 0.947 | 0.947 |
| Swell ratio [%] | 198 | 208 | 160 | 165 |
| FNCT [h] | 205 | 235 | 68 | 60 |

## Claims

1. A process for preparing an olefin polymer comprising polymerizing one or more olefins in the presence of a polymerization catalyst and hydrogen as molecular weight regulator in a gas-phase polymerization reactor comprising three or more polymerization zones which differ in the ratio of hydrogen to the sum of olefins in the reaction gas mixture within the polymerization zones, expressed as ratios of the volume fractions, and at least two of the polymerization zones are sub-zones of a polymerization unit, in which the growing polymer particles flow downward in a densified form and at least one of the polymerization zones is a riser, in which growing polymer particles flow upwards under fast fluidization or transport conditions, or is a polymerization zone, in which the polymerization occurs in a fluidized bed of growing polymer particles, wherein the gas-phase polymerization reactor comprises at least one polymerization zone, which has a ratio of hydrogen to the sum of olefins which is by a factor of at least 1.5 lower than the ratio of hydrogen to the sum of olefins in the polymerization zone having the highest ratio of hydrogen to the sum of olefins and which is by a factor of at least 1.5 higher than the ratio of hydrogen to the sum of olefins in the polymerization zone having the lowest ratio of hydrogen to the sum of olefins.

2. The process of claim 1, wherein the gas-phase polymerization reactor is a multizone circulating reactor in which one polymerization zone is a riser, in which growing polymer particles flow upwards under fast fluidization or transport conditions, and the other polymerization zones are sub-zones of a downcomer, in which the growing polymer particles flow downward in a densified form, wherein the riser and the downcomer are interconnected and polymer particles leaving the riser enter the downcomer and polymer particles leaving the downcomer enter the riser, thus establishing a circulation of polymer particles through the riser and the downcomer.

3. The process of claim 1, wherein one polymerization zone is a polymerization zone, in which the polymerization occurs in a fluidized bed of growing polymer particles.

4. The process of any of claims 1 to 3, wherein a barrier fluid in liquid form is fed into the upper part of the polymerization unit, in which the growing polymer particles flow downward in a densified form.

5. The process of claim 4, wherein the barrier fluid has a composition that the gas produced by vaporizing the barrier fluid has less than 0.5 vol.% hydrogen.

6. The process of claim 4 or 5, wherein the barrier fluid is obtained by feeding a part of a recycle gas stream into a distillation column and withdrawing the barrier fluid from the bottom of the distillation column.

7. The process of any of claims 1 to 6, wherein the difference in the ratios of hydrogen to the sum of olefins in the sub-zones of the polymerization unit, in which the growing polymer particles flow downward in a densified form, is obtained by feeding a part of a recycle gas stream to at least one of the sub-zones of the polymerization unit, in which the growing polymer particles flow downward in a densified form.

8. The process of any of claims 1 to 6, wherein the difference in the ratios of hydrogen to the sum of olefins in the sub-zones of the polymerization unit, in which the growing polymer particles flow downward in a densified form, is obtained by feeding a part of a recycle gas stream into a distillation column and withdrawing a hydrogen-rich gas from the top of the distillation column and feeding the gas withdrawn from the top of the distillation column to at least one of the sub-zones of the polymerization unit, in which the growing polymer particles flow downward in a densified form.

9. The process of any of claims 1 to 8, wherein the hold-up of polymer particles in the polymerization unit, in which the growing polymer particles flow downward in a densified form, is from 55 wt.% to 80 wt.% of the total hold-up of polymer particles in the gas-phase polymerization reactor.

10. The process of any of claims 1 to 9, wherein the gas-phase polymerization reactor comprising three or more polymerization zones which differ in the ratio of hydrogen to the sum of olefins in the reaction gas mixture is part of a reactor cascade.

11. The process of claim 10, wherein the reactor cascade comprises a fluidized bed reactor upstream of the gas-phase polymerization reactor comprising three or more polymerization zones which differ in the ratio of hydrogen to the sum of olefins in the reaction gas mixture.

12. The process of any of claims 1 to 11, wherein the polymerization catalyst is a Ziegler- or Ziegler-Natta-catalyst.

13. The process of any of claims 1 to 12, wherein the olefin polymer is an ethylene polymer prepared by homopolymerizing ethylene or copolymerizing ethylene with one or more comonomers.

14. The process of claim 13, wherein the ethylene polymer has a density of from 0.916 to 0.964 g/cm³, determined according to DIN EN ISO 1183-1:2004, Method A (Immersion) and a MFR_{21.6} at a temperature of 190 °C under a load of 21.6 kg, determined according to DIN EN ISO 1133-1:2012-03, of from 0.5 to 300 g/10 min.

## Patentansprüche

1. Verfahren zur Herstellung eines Olefinpolymers, umfassend Polymerisieren von einem oder mehreren Olefinen in Anwesenheit eines Polymerisationskatalysators und Wasserstoff als Molekulargewichtsregulierungsmittel in einem Gasphasenpolymerisationsreaktor, der drei oder mehr Polymerisationsbereiche umfasst, die sich im Verhältnis von Wasserstoff zu der Summe der Olefine in der Reaktionsgasmischung innerhalb der Polymerisationsbereiche unterscheiden, angegeben als Verhältnisse der Volumenfraktionen, und wobei mindestens zwei der Polymerisationsbereiche Teilbereiche einer Polymerisationseinheit sind, in der die wachsenden Polymerpartikel in verdichteter Form abwärts fließen, und mindestens einer der Polymerisationsbereiche ein Steigrohr ist, in dem wachsende Polymerpartikel unter schnellen Verwirbelungs- oder Transportbedingungen aufwärts fließen, oder ein Polymerisationsbereich ist, in dem die Polymerisation in einem Wirbelbett aus wachsenden Polymerpartikeln stattfindet, wobei der Gasphasenpolymerisationsreaktor mindestens einen Polymerisationsbereich umfasst, der ein Verhältnis von Wasserstoff zu der Summe der Olefine aufweist, das um einen Faktor von mindestens 1,5 niedriger als das Verhältnis von Wasserstoff zu der Summe der Olefine in dem Polymerisationsbereich mit dem höchsten Verhältnis von Wasserstoff zu der Summe der Olefine ist, und das um einen Faktor von mindestens 1,5 höher als das Verhältnis von Wasserstoff zu der Summe der Olefine in dem Polymerisationsbereich mit dem niedrigsten Verhältnis von Wasserstoff zu der Summe der Olefine ist.

2. Verfahren nach Anspruch 1, wobei der Gasphasenpolymerisationsreaktor ein Mehrbereichszirkulationsreaktor ist, wobei ein Polymerisationsbereich ein Steigrohr ist, in dem wachsende Polymerpartikel unter schnellen Verwirbelungs- oder Transportbedingungen aufwärts fließen, und die anderen Polymerisationsbereiche Teilbereiche eines Fallrohrs sind, in dem die wachsenden Polymerpartikel in verdichteter Form abwärts fließen, wobei das Steigrohr und das Fallrohr miteinander verbunden sind und Polymerpartikel, die das Steigrohr verlassen, in das Fallrohr eintreten, und Polymerpartikel, die das Fallrohr verlassen, in das Steigrohr eintreten, wodurch eine Zirkulation von Polymerpartikeln durch das Steigrohr und das Fallrohr hindurch aufgebaut wird.

3. Verfahren nach Anspruch 1, wobei ein Polymerisationsbereich ein Polymerisationsbereich ist, in dem die Polymerisation in einem Wirbelbett aus wachsenden Polymerpartikeln stattfindet.

4. Verfahren nach einem der Ansprüche 1 bis 3, wobei ein Barrierefluid in flüssiger Form in den oberen Teil der Polymerisationseinheit eingespeist wird, in der wachsende Polymerpartikel in verdichteter Form abwärts fließen.

5. Verfahren nach Anspruch 4, wobei das Barrierefluid eine Zusammensetzung aufweist, so dass das durch Verdampfen des Barrierefluids produzierte Gas weniger als 0,5 Vol.% Wasserstoff aufweist.

6. Verfahren nach Anspruch 4 oder 5, wobei das Barrierefluid erhalten wird, indem ein Teil eines Kreisgasstroms in eine Destillationskolonne eingespeist wird und das Barrierefluid aus dem Sumpf der Destillationskolonne abgezogen wird.

7. Verfahren nach einem der Ansprüche 1 bis 6, wobei der Unterschied in den Verhältnissen von Wasserstoff zu der Summe der Olefine in den Teilbereichen der Polymerisationseinheit, in denen die wachsenden Polymerpartikel in verdichteter Form abwärts fließen, erhalten wird, indem ein Teil eines Kreisgasstroms in mindestens einen der Teilbereiche der Polymerisationseinheit eingespeist wird, in dem die wachsenden Polymerpartikel in einer verdichteten Form abwärts fließen.

8. Verfahren nach einem der Ansprüche 1 bis 6, wobei der Unterschied in den Verhältnissen von Wasserstoff zu der Summe der Olefine in den Teilbereichen der Polymerisationseinheit, in denen die wachsenden Polymerpartikel in verdichteter Form abwärts fließen, erhalten wird, indem ein Teil eines Kreisgasstroms in eine Destillationskolonne eingespeist wird und ein wasserstoffreiches Gas aus dem oberen Bereich der Destillationskolonne abgezogen wird, und das aus dem oberen Bereich der Destillationskolonne abgezogene Gas in mindestens einen der Teilbereiche der Polymerisationseinheit eingespeist wird, in dem die wachsenden Polymerpartikel in einer verdichteten Form abwärts fließen.

9. Verfahren nach einem der Ansprüche 1 bis 8, wobei die Verweilmenge der Polymerpartikel in der Polymerisationseinheit, in der die wachsenden Polymerpartikel in einer verdichteten Form abwärts fließen, 55 Gew.% bis 80 Gew.% der gesamten Verweilmenge der Polymerpartikel in dem Gasphasenpolymerisationsreaktor ist.

10. Verfahren nach einem der Ansprüche 1 bis 9, wobei der Gasphasenpolymerisationsreaktor, der drei oder mehr Polymerisationsbereiche umfasst, die sich im Verhältnis von Wasserstoff zu der Summe der Olefine in der Reaktionsgasmischung unterscheiden, Teil einer Reaktorkaskade ist.

11. Verfahren nach Anspruch 10, wobei die Reaktorkaskade einen Wirbelbettreaktor umfasst, der dem Gasphasenpolymerisationsreaktor, der drei oder mehr Polymerisationsbereiche umfasst, die sich im Verhältnis von Wasserstoff zu der Summe der Olefine in der Reaktionsgasmischung unterscheiden, vorgeschaltet ist.

12. Verfahren nach einem der Ansprüche 1 bis 11, wobei der Polymerisationskatalysator ein Ziegler- oder Ziegler-Natta-Katalysator ist.

13. Verfahren nach einem der Ansprüche 1 bis 12, wobei das Olefinpolymer ein Ethylenpolymer ist, das durch Homopolymerisieren von Ethylen oder Copolymerisieren von Ethylen mit einem oder mehreren Comonomeren hergestellt worden ist.

14. Verfahren nach Anspruch 13, wobei das Ethylenpolymer eine Dichte von 0,916 bis 0,964 g/cm³, bestimmt gemäß DIN EN ISO 1183-1:2004, Methode A (Eintauchen) und einen MFR_{21.6} bei einer Temperatur von 190 °C unter einer Last von 21,6 kg, bestimmt gemäß DIN EN ISO 1133-1:2012-03, von 0,5 bis 300 g/10 min aufweist.

## Revendications

1. Procédé de préparation d'un polymère oléfinique comprenant la polymérisation d'une ou de plusieurs oléfines en présence d'un catalyseur de polymérisation et d'hydrogène en tant que régulateur de poids moléculaire dans un réacteur de polymérisation en phase gazeuse, comprenant trois zones de polymérisation ou plus qui diffèrent par le rapport d'hydrogène à la somme des oléfines dans le mélange gazeux réactionnel dans les zones de polymérisation, exprimé en rapport des fractions volumiques, et au moins deux des zones de polymérisation sont des sous-zones d'une unité de polymérisation, dans lesquelles les particules de polymère en croissance s'écoulent vers le bas sous une forme densifiée, et au moins l'une des zones de polymérisation est une colonne ascendante, dans laquelle les particules de polymère en croissance s'écoulent vers le haut dans des conditions de fluidisation ou de transport rapide, ou est une zone de polymérisation, dans laquelle la polymérisation se produit dans un lit fluidisé de particules de polymère en croissance, le réacteur de polymérisation en phase gazeuse comprenant au moins une zone de polymérisation, qui possède un rapport d'hydrogène à la somme des oléfines qui est inférieur d'un facteur d'au moins 1,5 au rapport d'hydrogène à la somme des oléfines dans la zone de polymérisation possédant le rapport le plus élevé d'hydrogène à la somme des oléfines et qui est supérieur d'un facteur d'au moins 1,5 au rapport d'hydrogène à la somme des oléfines dans la zone de polymérisation possédant le rapport le plus bas d'hydrogène à la somme des oléfines.

2. Procédé selon la revendication 1, le réacteur de polymérisation en phase gazeuse étant un réacteur à circulation multizone dans lequel une zone de polymérisation est une colonne ascendante, dans laquelle les particules de polymère en croissance s'écoulent vers le haut dans des conditions de fluidisation ou de transport rapide, et les autres zones de polymérisation sont des sous-zones d'une colonne descendante, dans laquelle les particules de polymère en croissance s'écoulent vers le bas sous une forme densifiée, la colonne ascendante et la colonne descendante étant interconnectées et les particules de polymère quittant de la colonne ascendante entrant dans la colonne descendante et les particules de polymère quittant la colonne descendante entrant dans la colonne ascendante, ce qui permet d'établir une circulation de particules de polymère à travers la colonne ascendante et la colonne descendante.

3. Procédé selon la revendication 1, une zone de polymérisation étant une zone de polymérisation dans laquelle la polymérisation se produit dans un lit fluidisé de particules de polymère en croissance.

4. Procédé selon l'une quelconque des revendications 1 à 3, un fluide barrière sous forme liquide étant introduit dans la partie supérieure de l'unité de polymérisation, dans laquelle les particules de polymère en croissance s'écoulent vers le bas sous une forme densifiée.

5. Procédé selon la revendication 4, le fluide barrière possédant une composition telle que le gaz produit par vaporisation du fluide barrière présente moins de 0,5% en volume d'hydrogène.

6. Procédé selon la revendication 4 ou 5, le fluide barrière étant obtenu par introduction d'une partie d'un flux gazeux de recyclage dans une colonne de distillation et par soutirage du fluide barrière du fond de la colonne de distillation.

7. Procédé selon l'une quelconque des revendications 1 à 6, la différence des rapports d'hydrogène à la somme des oléfines dans les sous-zones de l'unité de polymérisation, dans laquelle les particules de polymère en croissance s'écoulent vers le bas sous une forme densifiée, étant obtenue par introduction d'une partie d'un flux gazeux de recyclage dans au moins l'une des sous-zones de l'unité de polymérisation, dans laquelle les particules de polymère en croissance s'écoulent vers le bas sous une forme densifiée.

8. Procédé selon l'une quelconque des revendications 1 à 6, la différence des rapports d'hydrogène à la somme des oléfines dans les sous-zones de l'unité de polymérisation, dans laquelle les particules de polymère en croissance s'écoulent vers le bas sous une forme densifiée, étant obtenue par introduction d'une partie d'un flux gazeux de recyclage dans une colonne de distillation et par soutirage d'un gaz riche en hydrogène de la partie supérieure de la colonne de distillation et par introduction du gaz soutiré de la partie supérieure de la colonne de distillation dans au moins l'une des sous-zones de l'unité de polymérisation, dans laquelle les particules de polymère en croissance s'écoulent vers le bas sous une forme densifiée.

9. Procédé selon l'une quelconque des revendications 1 à 8, la rétention des particules de polymère dans l'unité de polymérisation, dans laquelle les particules de polymère en croissance s'écoulent vers le bas sous une forme densifiée, étant de 55% en poids à 80% en poids de la rétention totale des particules de polymère dans le réacteur de polymérisation en phase gazeuse.

10. Procédé selon l'une quelconque des revendications 1 à 9, le réacteur de polymérisation en phase gazeuse comprenant trois zones de polymérisation ou plus, qui diffèrent par le rapport d'hydrogène à la somme des oléfines dans le mélange gazeux réactionnel, faisant partie d'une cascade de réacteurs.

11. Procédé selon la revendication 10, la cascade de réacteurs comprenant un réacteur à lit fluidisé en amont du réacteur de polymérisation en phase gazeuse comprenant trois zones de polymérisation ou plus, qui diffèrent par le rapport d'hydrogène à la somme des oléfines dans le mélange gazeux réactionnel.

12. Procédé selon l'une quelconque des revendications 1 à 11, le catalyseur de polymérisation étant un catalyseur de Ziegler ou de Ziegler-Natta.

13. Procédé selon l'une quelconque des revendications 1 à 12, le polymère oléfinique étant un polymère d'éthylène préparé par homopolymérisation d'éthylène ou par copolymérisation d'éthylène avec un ou plusieurs comonomères.

14. Procédé selon la revendication 13, le polymère d'éthylène possédant une densité de 0,916 à 0,964 g/cm³, déterminée selon la norme DIN EN ISO 1183-1:2004, procédé A (immersion) et un MFR₂₁,₆ (indice de fluidité à chaud) à une température de 190°C sous une charge de 21,6 kg, déterminé selon la norme DIN EN ISO 1133-1:2012-03, de 0,5 à 300 g/10 min.
